(19) Europäisches Patentamt
European Patent Office
Office européen des brevets

(11) Veröffentlichungsnummer: **0 214 936 B1**

(12) **EUROPÄISCHE PATENTSCHRIFT**

(45) Veröffentlichungstag der Patentschrift: **08.07.92**

(51) Int. Cl.⁵: **A01N 25/28**, B01J 13/02

(21) Anmeldenummer: **86810406.8**

(22) Anmeldetag: **08.09.86**

(54) **Verfahren zur Herstellung von Mikrokapseln.**

(30) Priorität: **13.09.85 US 776080**

(43) Veröffentlichungstag der Anmeldung:
**18.03.87 Patentblatt 87/12**

(45) Bekanntmachung des Hinweises auf die Patenterteilung:
**08.07.92 Patentblatt 92/28**

(84) Benannte Vertragsstaaten:
**AT BE CH DE FR GB IT LI LU NL SE**

(56) Entgegenhaltungen:
**EP-A- 0 017 409**
**EP-A- 0 148 149**
**US-A- 4 285 720**

(73) Patentinhaber: **CIBA-GEIGY AG**
**Klybeckstrasse 141**
**CH-4002 Basel(CH)**

(72) Erfinder: **Hässlin, Hans Walter, Dr.**
**Hebelstrasse 9A**
**7889 Grenzach-Wyhlen 1(DE)**
Erfinder: **Hopkinson, Michael J.**
**Route 2, Box 14**
**Pleasant Garden North Carolina 27313(US)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 214 936 B1

## Beschreibung

Die vorliegende Erfindung betrifft ein Verfahren zur Herstellung von Mikrokapseln mit einer Kapselwand aus Polyharnstoff, die einen mit Wasser nicht mischbaren pestiziden Wirkstoff einschliessen, durch Grenzflächenreaktion einer wässrigen Dispersion einer Lösung eines Polyisocyanats in dem mit Wasser nicht mischbaren Pestizid und einer wässrigen Lösung eines Polyamins.

Die Herstellung von Mikrokapseln durch Grenzflächenreaktion in einer Dispersion, wobei eine der zur Bildung der Kapselwand benötigten reaktiven Komponenten in der dispersen Phase und die andere in der kontinuierlichen Phase gelöst ist, ist an sich bekannt. Ein solches Verfahren ist beispielsweise in der US-Patentschrift 3 577 515 beschrieben. Dieses Verfahren wird in der Weise durchgeführt, dass man zunächst eine Lösung der zur Bildung der Kapselwand benötigten ersten reaktiven Komponente in einer kontinuierlichen Phase dispergiert und dann eine Lösung der zweiten reaktiven Komponente in dem die kontinuierliche Phase bildenden Medium zugibt. Dabei wird für die Dispersion einer mit Wasser nicht mischbaren organischen Phase in einer kontinuierlichen wässrigen Phase die Verwendung von nichtionischen Schutzkolloiden, wie Polyvinylalkohol, Gelatine und Methylcellulose, empfohlen.

Ein weiteres Verfahren der vorgenannten Art ist in den US-Patentschriften 4 280 833 und 4 417 916 beschrieben. Nach diesem Verfahren wird eine Suspension von Mikrokapseln mit einer Kapselwand aus Polyharnstoff hergestellt, die einen herbiziden Wirkstoff enthalten.

Das Verfahren wird in der Weise durchgeführt, dass man eine Lösung von Polymethylenpolyphenylisocyanat in dem herbiziden Wirkstoff in Wasser dispergiert und die Dispersion anschliessend mit der wässrigen Lösung eines Polyamins zur Reaktion bringt. Das wesentliche Merkmal dieses Verfahrens besteht darin, dass man als Dispergiermittel Salze von Ligninsulfonsäure verwendet.

Ein wesentlicher Nachteil dieser bekannten Verfahren besteht darin, dass bei Verwendung der genannten Dispergiermittel nach der Zugabe der zweiten reaktiven Komponente eine starke Steigerung der Viskosität auftritt, die die Rührfähigkeit der Mischung stark herabsetzt. Dies ist insbesondere dann der Fall, wenn der Anteil der aus Aktivsubstanz, Isocyanat und gegebenenfalls Lösungsmittel bestehenden dispersen Phase hoch ist und beispielsweise 50 Gew.% oder mehr beträgt. Durch diese Herabsetzung der Rührfähigkeit wird der Reaktionsverlauf nachteilig beeinflusst, was zu verzögerter und unvollständiger Umsetzung der beiden reaktiven Komponenten führt. Dies hat zur Folge, dass die unmittelbar erhaltene Suspension von Mikrokapseln in der wässrigen Phase noch nicht umgesetztes Polyamin und in den Kapseln noch nicht umgesetztes Polyisocyanat enthält. Dies ist insbesondere bei der direkten Weiterverwendung der erhaltenen Kapselsuspension nicht wünschenswert.

Es ist das Ziel der vorliegenden Erfindung, ein Verfahren zur Herstellung von Mikrokapseln mit einer Kapselwand aus Polyharnstoff bereitzustellen, das von den Nachteilen der vorgenannten bekannten Verfahren frei ist und das die Herstellung von Mikrokapseln in einfacher Weise und unter vollständiger Umsetzung der die Kapselwand bildenden reaktiven Komponenten ermöglicht.

Es wurde gefunden, dass dieses Ziel für die Herstellung von Mikrokapseln, die einen pestiziden Wirkstoff einschliessen, mit einer Kapselwand aus Polyharnstoff dadurch erreicht werden kann, dass man die Umsetzung der in Wasser dispergierten Lösung eines Polyisocyanats in einem in Wasser schwerlöslichen pestiziden Wirkstoff mit der wässrigen Lösung eines Polyamins in Gegenwart eines Gemisches aus mindestens einem anionischen Dispergator und einem nichtionischen Schutzkolloid und/oder einem nichtionischen Tensid durchführt.

Gegenstand der vorliegenden Erfindung ist daher ein Verfahren zur Herstellung einer wässrigen Suspension von Mikrokapseln mit einer Kapselwand aus Polyharnstoff, die ein mit Wasser nicht mischbares Pestizid einschliessen, durch Dispergieren einer Lösung eines Polyisocyanats in dem in Wasser schwerlöslichen Pestizid in Wasser und nachfolgende Umsetzung der Dispersion mit einem Polyamin, dadurch gekennzeichnet, dass man das Dispergieren der Lösung des Polyisocyanats in dem in Wasser schwerlöslichen Pestizid in Wasser und die nachfolgende Umsetzung der Dispersion mit dem Polyamin in Gegenwart eines anionischen Dispergators und mindestens eines nichtionischen Schutzkolloids und/oder eines nichtionischen Tensids durchführt.

Als anionische Dispergatoren kommen allgemein Oligomere und Polymere, sowie Polykondensate in Betracht, die eine ausreichende Anzahl von anionischen Gruppen enthalten, um ihre Wasserlöslichkeit zu gewährleisten. Geeignete anionische Gruppen sind beispielsweise Sulfogruppen oder Carboxylgruppen, wobei Polymere mit Carboxylgruppen nur bei höherem pH-Wert, vorzugsweise bei einem pH-Wert grösser als 5, verwendet werden können. Die Zahl der anionischen Gruppen pro Polymermolekül beträgt in der Regel mindestens 60 % der Anzahl der am Aufbau des Moleküls beteiligten Monomereinheiten. Oligomere und Polymere, die Sulfogruppen enthalten, können entweder durch Polymerisation Sulfogruppen enthaltenden Monomeren oder durch Sulfonierung der betreffenden Oligomeren oder Polymeren hergestellt werden.

Polymere, die Carboxylgruppen enthalten, können durch Verseifung von Polyacrylaten oder Polymethacrylaten erhalten werden, wobei der Verseifungsgrad mindestens 60 % betragen muss. Insbesondere sind als anionische Dispergatoren sulfonierte Polymere und Kondensationsprodukte von aromatischen Sulfonsäuren mit Formaldehyd geeignet. Typische Beispiele für solche anionischen Dispergatoren sind:

A. Salze der Polystyrolsulfonsäure, insbesondere die Alkalimetall-, Erdalkalimetall- und Ammoniumsalze, sowie die Salze von organischen Aminen, die durch Polymerisation von Styrolsulfonsäure beziehungsweise deren Salzen oder durch Sulfonierung von Polystyrol und anschliessende Neutralisation mit einer entsprechenden Base erhalten werden können, wobei im Falle der Sulfonierung von Polystyrol der Sulfonierungsgrad wenigstens 60 % betragen sollte;

B. Salze der Polyvinylsulfonsäure, insbesondere die Alkalimetall-, Erdalkalimetall- und Ammoniumsalze, sowie die Salze mit organischen Aminen, die durch Polymerisation von Vinylsulfonsäure oder deren Salzen herstellbar sind;

C. Salze von Kondensationsprodukten von Naphthalinsulfonsäuren, insbesondere Naphthalin-2-sulfonsäure, mit Formaldehyd, insbesondere die Alkalimetall-, Erdalkalimetall- und Ammoniumsalze, sowie ihre Salze mit organischen Aminen, die durch Sulfonieren von Naphthalin, Kondensation der gebildeten Naphthalinsulfonsäuren mit Formaldehyd und Neutralisation mit einer entsprechenden Base erhalten werden können. Die Kondensationsprodukte können durch die Formel

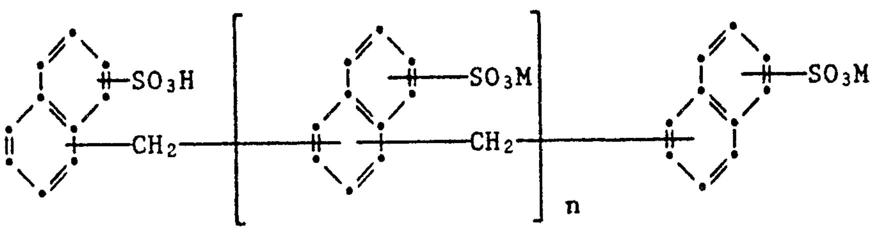

beschrieben werden, in welcher M Natrium, Kalium, Magnesium, Kalzium, Ammonium oder das von einem organischen Amin abgeleitete Kation und n 1-25 bedeuten. Das Molekulargewicht dieser Produkte beträgt etwa 500-6000.

D. Salze von Kondensationsprodukten von Naphthalinsulfonsäure mit Phenolsulfonsäure und Formaldehyd, insbesondere die Alkalimetall-, Erdalkalimetall- und Ammoniumsalze, sowie Salze mit organischen Aminen. Diese Produkte stellen Sulfogruppen enthaltende Polymere mit einem mittleren Molekulargewicht von 6'000-8'000 dar, in denen die monomeren Bausteine Naphthalin und Phenol teils über Methylengruppen und teils über Sulfongruppen miteinander verbunden sind. Ihre Struktur ist ungefähr wie folgt.

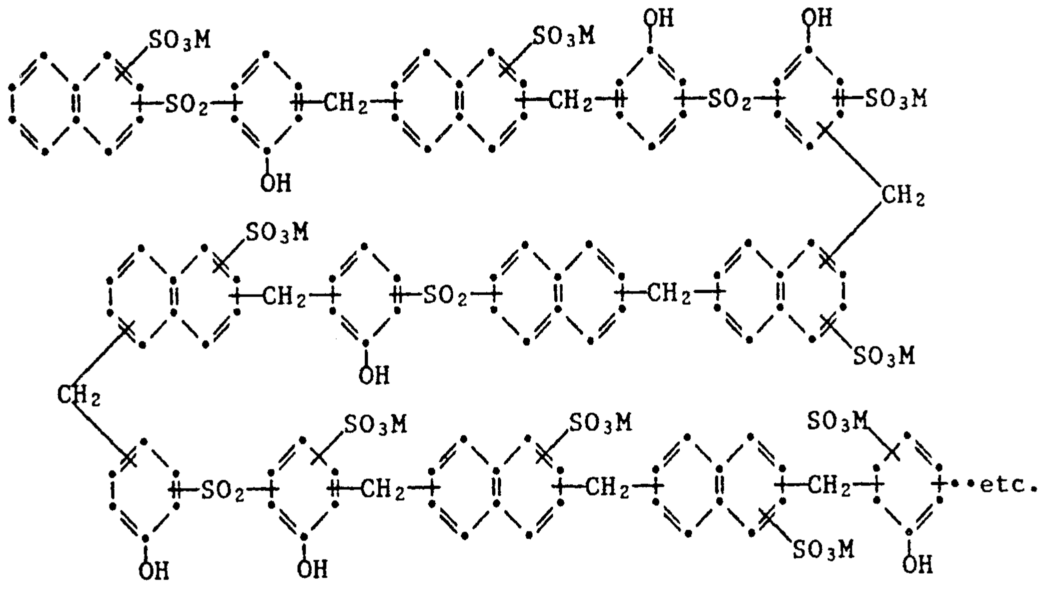

wobei M Natrium, Kalium, Magnesium, Calcium, Ammonium oder das von einem organischen Amin

abgeleitete Kation bedeutet.

E. Salze der Ligninsulfonsäure, insbesondere das Natrium-, Kalium-, Magnesium-, Calcium- oder Ammoniumsalz.

Bevorzugte anionische Dispergatoren sind Salze von Polystyrolsulfonsäure (Typ A), Salze von Kondensationsprodukten von Naphthalinsulfonsäure mit Formaldehyd (Typ C) und insbesondere Kondensationsprodukte von Naphthalinsulfonsäure mit Phenolsulfonsäure und Formaldehyd (Typ D).

Die als anionische Dispergatoren besonders bevorzugten Kondensationsprodukte von Naphthalinsulfonsäure mit Phenolsulfonsäure und Formaldehyd des oben genannten Typs D sind bisher nicht in der Literatur beschrieben. Sie können hergestellt werden, indem man Naphthalin bei 120-130 ° C zunächst mit konzentrierter Schwefelsäure und/oder Oleum in Naphthalinsulfonsäure überführt, dem Reaktionsgemisch anschliessend Phenol zufügt und zuerst bei 120-130 ° weiter umsetzt und dann im Vakuum bei 150-170 ° C das Reaktionswasser abtrennt und das Reaktionsprodukt nach Abkühlung auf 90-100 ° mit Formaldehyd kondensiert, danach auf pH 6-7 neutralisiert, zur Trockene eindampft und den Rückstand granuliert. Man erhält so einen wasserlöslichen anionischen Dispergator (nachfolgend "Dispergator A" genannt) in Form eines Granulats mit einem mittleren Molekulargewicht von 6'000-8'000.

Bei der Sulfonierung von Naphthalin unter den vorgenannten Bedingungen wird vorwiegend Naphthalin-2-Sulfonsäure neben geringen Mengen Naphthalindisulphonsäure gebildet. Nach Zugabe des Phenols wird dieses ebenfalls sulfoniert. Dabei werden jedoch, insbesondere beim nachfolgenden Aufheizen auf 150-170 ° neben Phenolsulfonsäure auch in erheblichem Masse Sulfone, wie 4,4'-Dihydroxydiphenylsulfon und 4-Hydroxyphenylnaphthylsulfon, gebildet. Daher entsteht bei der nachfolgenden Kondensation mit Formaldehyd ein Polymeres, dessen monomere Bausteine Naphthalin und Phenol teils über Methylengruppen und teils über Sulfongruppen verknüpft sind. Bei der Herstellung von Dispergator A können Naphthalin, Phenol, Schwefelsäure, Formaldehyd und Base im Molverhältnis 1:0,5-1:2-2,5:0,4-0,8:2-3 eingesetzt werden. Vorteilhaft beträgt das Molverhältnis von Naphthalin:Phenol:Schwefelsäure:Formaldehyd:Base 1:0,7:2:0,5:2, wobei als Base vorteilhaft Natriumhydroxid verwendet wird. Die Schwefelsäure besteht vorteilhaft aus Gemischen von konzentrierter Schwefelsäure und Oleum, wobei die Menge von freiem $SO_3$ im Oleum mindestens der Menge Wasser in der konzentrierten Schwefelsäure equivalent ist, sodass beim Vermischen von konzentrierter Schwefelsäure und Oleum mindestens 100 %ige Schwefelsäure entsteht. Formaldehyd wird vorteilhaft als wässrige Lösung, beispielsweise 37%ige wässrige Lösung, eingesetzt. Die destillative Abtrennung des Reaktionswassers erfolgt vorteilhaft bei einem Druck von 10-50 bar.

Als nichtionische Schutzkolloide kommen allgemein wasserlösliche Polymere in Betracht, deren Molekulargewicht in der Regel 10 000 - 200 000 beträgt. Dabei kann über das Molekulargewicht des jeweils verwendeten wasserlöslichen Polymeren der mittlere Durchmesser der gebildeten Kapseln beeinflusst werden. Die Verwendung von wasserlöslichen Polymeren mit niedrigerem Molekulargewicht hat eine geringere Viskosität des Reaktionsgemisches und damit die Bildung von grösseren Kapseln zur Folge, während die Verwendung von wasserlöslichen Polymeren mit höherem Molekulargewicht eine höhere Viskosität des Reaktionsgemisches und damit die Bildung von Kapseln mit kleinerem Durchmesser bewirkt. Geeignete wasserlösliche Polymere sind beispielsweise:

Polyvinylalkohol, Polyvinylmethyläther, Polyvinylpyrrolidon, Hydroxyäthylcellulose, Hydroxypropylcellulose, Methylcellulose (Substitutionsgrad: 1,5-2), Hydroxyäthymethylcellulose, Hydroxypropylmethylcellulose, Poly-(2-hydroxyäthyl)-methacrylat, Poly-[2-(2-hydroxyäthoxy)-äthyl]-methacrylat, Polyäthylenoxid (Polyoxyäthylen) und Polyallylalkohol (Polyglycidol).

Ein bevorzugtes nichtionisches Schutzkolloid ist Polyvinylalkohol. Besonders geeignet sind Polyvinylalkohole mit einer Viskosität von 4-60 cp (gemessen an 4 %igen wässrigen Lösungen bei 20 ° C), die durch Verseifung von Polyvinylacetat hergestellt wurden, wobei der Verseifungsgrad mindestens 60 %, vorzugsweise jedoch 80-95 % beträgt. Geeignete Produkte dieser Art sind beispielsweise unter der Bezeichnung MOWIOL® im Handel.

Als nichtionische Tenside kommen allgemein nichtionische wasserlösliche Polymere mit einem Molekulargewicht unter 20 000, vorzugsweise unter 5 000 in Betracht. Besonders geeignete nichtionische Tenside dieser Art sind die durch Umsetzung von Aethylenoxid oder durch kombinierte Umsetzung von Aethylenoxid und Propylenoxid mit Fettalkoholen, Alkylphenolen, Fettsäuren, Fettsäureestern von Polyhydroxyverbindungen, Fettsäureamiden und Fettaminen herstellbaren Produkte, wobei die Zahl der Aethylenoxid und PropylenoxidEinheiten in weiten Grenzen variiert werden kann. Im allgemeinen liegt die Zahl der Aethylenoxid bzw. Aethylenoxid/Propylenoxid-Einheiten bei 1-200, vorzugsweise bei 5-100 und insbesondere bei 8-40. Geeignete nichtionische Tenside sind beispielsweise:

Alkylpolyäthylenglykoläther der Formel

$$R_1-O\{CH_2-CH_2-O\}_{n_1}H$$

worin $R_1$ $C_8$-$C_{20}$Alkyl und $n_1$ 2-100 bedeutet. Produkte dieser Art sind im Handel beispielsweise unter den Bezeichnungen BRIJ® (Atlas Chemical), ETHYLAN® CD und ETHYLAN® D (Diamond Shamrock) GENAPOL® C, GENAPOL® O und GENAPOL® S (Hoechst AG) verfügbar;
Alkylphenolpolyäthylenglykoläther der Formel

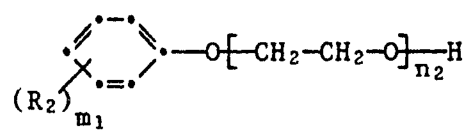

worin $R_2$ $C_8$-$C_{12}$-Alkyl, $m_1$ 1-3 und $n_2$ 2-40 bedeutet. Bevorzugte Bedeutungen von $R_2$ sind Octyl und Nonyl. Produkte dieser Art sind im Handel erhältlich, beispielsweise unter den Bezeichnungen Antarox (GAF), TRITON® X (Röhm und Haas Co.), ATLOX® 4991 (ICI), ARKOPAL® N (American Hoechst) und ETHYLAN® (Lankro Chem. Ltd);
$\alpha$-Phenäthylphenolpolyglykoläther der Formel

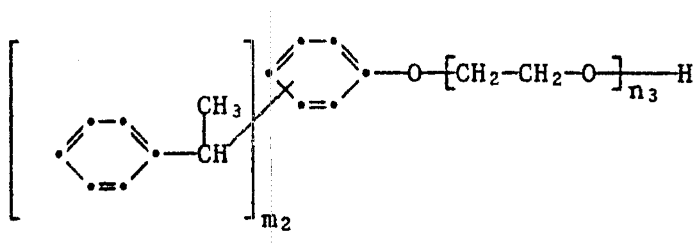

worin $m_2$ 1-3 und $n_3$ 5-40 bedeutet. Diese Produkte werden auch als äthoxylierte Styrylphenole bezeichnet. Im Handel erhältliche Produkte dieser Art sind beispielsweise DISTY® 125 (Geronazzo) und SOPROPHOR® CY 18 (Rhone Poulenc S.A.);
Fettsäure(polyäthoxyäthyl)ester der Formel

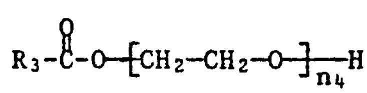

worin $R_3$ $C_8$-$C_{22}$-Alkyl oder $C_{10}$-$C_{22}$-Alkenyl und $n_4$ 2-50 bedeutet. Diese Produkte leiten sich insbesondere von Laurinsäure, Oleinsäure und Stearinsäure ab. Im Handel sind solche Produkte beispielsweise unter der Bezeichnung NONISOL® (Ciba-Geigy) oder MYRJ® (ICI) erhältlich;
Sorbitan-polyäthylenglykoläther-fettsäureester der Formel

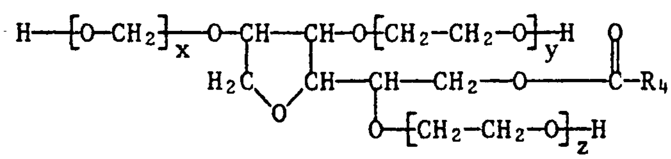

worin $R_4$ $C_8$-$C_{20}$-Alkyl und x, y und z je 1-50 bedeuten, wobei die Summe x+y+z 20-150 beträgt. Als Säurereste $R_4$ kommen insbesondere die Reste der Laurinsäure, Stearinsäure, Palmitinsäure und Oleinsäure in Betracht. Solche Produkte werden auch als Polysorbate bezeichnet und sind im Handel beispielsweise unter der Bezeichnung TWEEN® (ICI) erhältlich;
Triglycerid-polyäthylenglykoläther der Formel

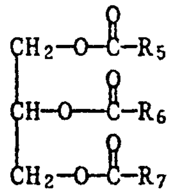

in welcher $R_5$, $R_6$ und $R_7$ den Rest der Formel

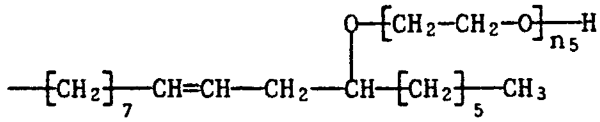

und $R_5$ und $R_6$ unabhängig voneinander auch $C_8$-$C_{20}$-Alkyl oder $C_8$-$C_{20}$-Alkenyl bedeuten, wobei $n_5$ für 3-100 steht. Als Säurereste $R_5CO$- und $R_6CO$- mit $C_8$-$C_{20}$-Alkyl- und $C_8$-$C_{20}$-Alkenylgruppen kommen insbesondere die Reste der Laurinsäure, Palmitinsäure, Stearinsäure und Oleinsäure in Betracht. Ein bevorzugter Vertreter dieses Tensid-Typs ist äthoxyliertes Rizinusöl. Solche Produkte sind im Handel unter der Bezeichnung EMULSOGEN® (Hoechst AG) erhältlich. Fettsäure-polyäthoxyäthylamide der Formel

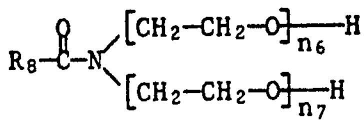

worin $R_8$ $C_8$-$C_{20}$-Alkyl, $C_8$-$C_{20}$-Alkenyl und $n_6$ und $n_7$ jeweils 1-25 bedeutet. Als Säurereste $R_8CO$- kommen insbesondere die Reste der Laurinsäure, Oleinsäure, Palmitinsäure und Stearinsäure in Betracht. Produkte dieser Art sind beispielsweise unter den Bezeichnungen AMIDOX® (Stepan Chemical Co.) ETHOMID® (Armak Co.) im Handel;
N-Polyäthoxyäthylamine der Formel

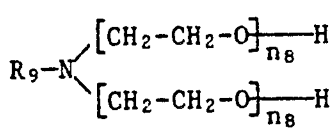

wobei $R_9$ $C_8$-$C_{18}$-Alkyl oder $C_8$-$C_{18}$-Alkenyl bedeutet und $n_8$ jeweils 1-15 bedeutet. Besonders geeignet sind die von Fettaminen, wie Cocosfettamin, Oleylamin, Stearylamin und Talgfettamin abgeleiteten Produkte. Solche Produkte sind beispielsweise unter der Bezeichnung GENAMIN® (Hoechst) im Handel;
N,N,N',N'-Tetra(polyäthoxypolyproxyäthyl)-äthylendiamine der Formel

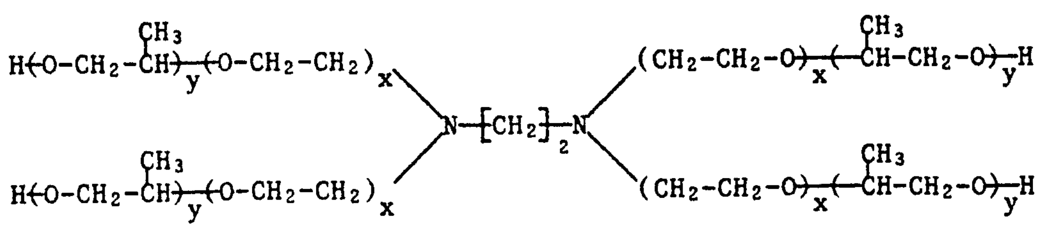

worin x und y je 2-50 und die Summe x + y jeweils 4-100 beträgt. Produkte dieser Art sind im Handel erhältlich, insbesondere unter den Bezeichnungen TERRONIL® und TETRONIC® (BASF Wyandotte Corp.);
Alkyl-polyäthylenglykol/polypropylenglykoläther der Formel

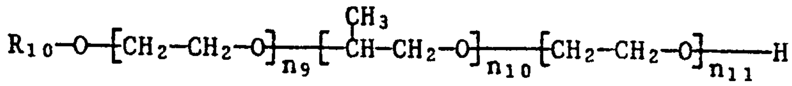

worin $R_{10}$ Wasserstoff, $C_8$-$C_{20}$-Alkyl oder $C_8$-$C_{20}$-Alkenyl und $n_9$ und $n_{11}$ je 2-200 und $n_{10}$ 10-80 bedeutet und die Summe $n_9 + n_{10} + n_{11}$ 15-450 beträgt. Besonders geeignete Produkte dieser Art sind beispielsweise unter der Bezeichnung PLURONIC® (BASF Wyandotte Corp.) im Handel erhältlichen Polyäthylenoyid-Polypropylenoxid-Blockpolymerisate ($R_{10}$ = H).

Bevorzugte nichtionische Tenside sind Aethylenoxid-Propylenoxid-Blockpolymerisate(PLURONICS®), N,N,N',N'-Tetra(polyäthoxypolypropoxyäthyl)-äthylendiamine (TETRONICS®), Nonylphenolpolylglykoläther mit 10-20-Aethylenoxideinheiten, Alkylpolyäthylenglykoläther, die sich von Fettalkoholen ableiten (GENAPOL®) und N-Polyäthoxyäthylamine, die sich von Fettaminen ableiten (GENAMIN®). Besonders bevorzugte nichtionische Tenside sind Aethylenoxid-Propylenoxid-Blockpolymersate (PLURONICS®).

Unter Polyisocyanaten sind im Rahmen vorliegender Anmeldung allgemein solche Verbindungen zu verstehen, die zwei und mehr Isocyanatgruppen im Molekül enthalten. Bevorzugt sind Di- und Triisocyanate, wobei die Isocyanatgruppen an einen aliphatischen oder einen aromatischen Grundkörper gebunden sein können. Beispiele für geeignete aliphatische Diisocyanate sind Tetramethylendiisocyanat, Pentamethylendiisocyanat und Hexamethylendiisocyanat. Geeignete aromatische Isocyanate sind Toluylendiisocyanat (TDI; Mischung aus 2,4- und 2,6-Isomeren), Diphenylmethan-4,4'-diisocyanat (MDI; DESMODUR® VL (Bayer)), (Polymethylenpolyphenylisocyanat (MONDUR® MR (Mobay Chemical Company)); PAPI®, PAPI® 135 (Upjohn Co)), 2,4,4'-Diphenyläthertriisocyanat, 3,3'-Dimethyl-4,4'-diphenyldiisocyanat, 3,3'-Dimethoxy-4,4'-diphenyldiisocyanat, 1,5-Naphthylendiisocyanat und 4,4',4''-Triphenylmethantriisocyanat. Ein weiteres geeignetes Diisocyanat ist Isophorondiisocyanat. Ferner sind auch Additionsprodukte von Diisocyanaten an mehrwertige Alkohole, wie Aethylenglykol, Glycerin und Trimethylolpropan geeignet, wobei pro Mol mehrwertiger Alkohol jeweils eine der Zahl der Hydroxygruppen des jeweiligen Alkohols entsprechende Zahl von Molen Diisocyanat addiert werden. Auf diese Weise werden mehrere Moleküle Diisocyanat über Urethangruppen an den mehrwertigen Alkohol unter Bildung von höhermolekularen Polyisocyanaten gebunden. Ein besonders geeignetes Produkt dieser Art ist durch Umsetzung von 3 Mol Toluylendiisocyanat mit einem Mol 2-Aethylglycerin (1,1-bis-Methylolpropanol) herstellbar (DESMODUR® L). Weitere geeignete Produkte werden durch Addition von Hexamethylendiisocyanat oder Isophorondiisocyanat an Aethylenglykol oder Glycerin erhalten. Bevorzugte Polyisocyanate sind Diphenylmethan-4,4'-diisocyanat und Polymethylenpolyphenylisocyanat.

Die vorgenannten Di- und Triisocyanate können jeweils einzeln oder als Mischungen von zwei und mehreren dieser Isocyanate verwendet werden.

Als Polyamine sind im Rahmen vorliegender Erfindung allgemein solche Verbindungen zu verstehen, die zwei und mehr Aminogruppen im Molekül enthalten, wobei diese Aminogruppen an aliphatische und aromatische Grundkörper gebunden sein können. Geeignete aliphatische Polyamine sind beispielsweise $\alpha,\omega$-Diamine der Formel

$$H_2N-[CH_2]_n-NH_2$$

in welcher n eine ganze Zahl von 2-6 bedeutet. Als Beispiele für solche Diamine seien Aethylendiamin, Propylen-1,3-diamin, Tetramethylendiamin, Pentamethylendiamin und Hexamethylendiamin genannt. Ein bevorzugtes Diamin ist Hexamethylendiamin.

Weitere geeignete aliphatische Polyamine sind Polyäthylenimine der Formel

$$H_2N-[CH_2-CH_2-NH]_n-H$$

worin n eine ganze Zahl von 2-5 bedeutet. Als Beispiele für solche Polyäthylenimine seien Diäthylentriamin, Triäthylentetramin, Tetraäthylenpentamin, Pentaäthylenhexamin genannt.

Weitere geeignete aliphatische Polyamine sind Dioxaalkan-$\alpha,\omega$-diamine, wie das 4,9-Dioxadodecan-1,12-diamin der Formel

$$H_2N-[CH_2]_3-O-[CH_2]_4-O-[CH_2]_3-NH_2 \quad .$$

Geeignete aromatische Polyamine sind beispielsweise 1,3-Phenylendiamin, 2,4-Toluylendiamin, 4,4'-Diaminodiphenylmethan, 1,5-Diaminonaphthalin, 1,3,5-Triaminobenzol, 2,4,6-Triaminotoluol, 1,3,6-Triaminonaphthalin, 2,4,4'-Triaminodiphenyläther, 3,4,5-Triamino-1,2,4-triazol und 1,4,5,8-Tetraaminoanthrachinon. Diejenigen der vorgenannten Polyamine, die nicht oder nicht genügend wasserlöslich sind, können als Hydrochloride eingesetzt werden.

Weiterhin sind Polyamine geeignet, die neben den Aminogruppen Sulfogruppen oder Carboxylgruppen enthalten. Beispiele für solche Polyamine sind 1,4,-Phenylendiaminsulfonsäure, 4,4'-Diaminodiphenyl-2-sulfonsäure, oder Diaminomonocarbonsäuren, wie Ornithin und Lysin.

Die vorgenannten Polyamine können einzeln oder als Mischungen von zwei oder mehr Polyaminen eingesetzt werden.

Als Pestizide, die nach dem erfindungsgemässen Verfahren formuliert werden können, kommen allgemein solche in Betracht, die

- in Wasser unlöslich, aber gegen Wasser stabil sind,
- bei Raumtemperatur flüssig oder einen Schmelzpunkt von ≦ 60 °C haben oder solche, die in einem mit Wasser nicht mischbaren organischen Lösungsmittel löslich sind,
- gegen Isocyanate inert sind und
- ein Lösungsvermögen für Polyisocyanate der vorgenannten Art besitzen.

Als mit Wasser nicht mischbare Lösungsmittel, in denen die Pestizide gelöst sein können, kommen aliphatische und aromatische Kohlenwasserstoffe, wie Hexan, Cyclohexan, Benzol, Toluol, Xylol, Mineralöl oder Kerosin in Betracht. Weiterhin geeignet sind Cyclohexanon, sowie halogenierte Kohlenwasserstoffe, wie Methylenchlorid, Chloroform, Kohlenstofftetrachlorid, Chlorbenzol und o-Dichlorbenzol. Weiterhin sind Gemische von ein- und mehrfach alkylierten Aromaten geeignet, wie sie beispielsweise unter der Bezeichnung (SHELLSOL®) im Handel sind.

Nach dem erfindungsgemässen Verfahren können pestizide Wirkstoffe verschiedenster Art, wie z.B.Herbizide, Pflanzenwuchsregulatoren, Insektizide, Akarizide, Nematizide, Safener und Ectoparasitizide verarbeitet werden, die von ihrer chemischen Konstitution her den verschiedensten Stoffklassen angehören können. Stoffklassen, denen die nach dem erfindungsgemässen Verfahren formulierbaren pestiziden Wirksubstanzen angehören können, sind beispielsweise:
s-Triazine, Harnstoffe, Halogenacetanilide, Diphenylätherderivate, Phenoxypropionsäurederivate, Dinitroaniline, Acylalanine, Triazolderivate, Carbamate, Phosphorsäureester, Pyrethroide, Benzylsäureester, polycyclische Halogenkohlenwasserstoffe, Formamidine und Dihydro-1,3-thiazol-2-yliden-aniline. Nachstehend werden für die vorgenannten Stoffklassen Beispiele für verwendbare Einzelverbindungen genannt, wobei zur Bezeichnung der einzelnen Verbindungen der Common-Name verwendet wird, sofern dieser bekannt ist (vgl. The Pesticide Manual, 7th Edition, 1983, British Crop Protection Council).

<u>s-Triazine</u>

Atrazin, Propazin, Terbutylazin;
Ametryn, Aziprotryn, Desmetryn, Dipropetryn, Prometryn, Terbutryn; Secbumeton, Terbumeton.

<u>Harnstoffe</u>

Chlorbromuron, Chloroxuron, Chlortoluron, Fluometuron, Metobromuron, Thiazafluron.

<u>Halogenacetanilide</u>

Dimethachlor, Metolachlor, Pretilachlor, 2-Chlor-N-(1-methyl-2-methoxyäthyl)-acet-2,6-xylidid, Alachlor, Butachlor, Diethatyläthyl, Propachlor.

<u>Diphenylätherderivate</u>

Bifenox, Diclofopmethyl, 4-(4-Pentyn-1-yloxy)-diphenyläther.

Phenoxypropionsäurederivate

Fluazifop.

Dinitroaniline

Butralin, Ethalfluralin, Fluchloralin, Isopropalin, Pendimethalin, Profluralin, Trifluralin.

Acylalanine

Fluralaxyl, Metalaxyl;
Benzoylprop-äthyl, Flamprop-methyl.

Triazolderivate

Etaconazol, Propiconazol, 1-[2-(2,4-Dichlorphenyl)-pent-1-yl]-1H-1,2,4-triazol;
Triadimefon.

Carbamate

Dioxacarb, Furathiocarb;
Aldicarb, Benomyl, 2-sec.Butylphenyl-methylcarbamat, Etiofencarb, Isoprocarb, Propoxur;
Carbetamid, Butylat, Di-allat, EPTC, Molinat, Thiobencarb, Tri-allat, Vernolat.

Phosphorsäureester

Piperophos, Anilofos, Butamifos;
Azamethiphos, Chlorfenvinphos, Dichlorvos, Diazinon, Methidathion; Azinphos-äthyl, Azinphos-methyl, Chlorpyrifos, Chlorthiofos, Crotoxyphos, Cyanophos, Demeton, Dialifos, Dimethoate, Disulfoton, Etrimfos, Famphur, Flusulfothion, Fluthion, Fonofos, Formothion, Heptenophos, Isofenphos, Isoxathion, Malathion, Mephospholan, Mevinphos, Naled. Oxydemeton-methyl, Oxydeprofos, Parathion, Phoxim, Pyrimiphos-methyl, Profenofos, Propaphos, Propetamphos, Prothiophos, Quinalphos, Sulprofos, Phemephos, Terbufos, Triazophos, Trichloronate; Fenamipos, Isazophos;
s-Benzyl-o,o-diisopropylphosphorothioat, Edinphos Pyrazophos;

Pyrethroide

Allethrin, Bioallethrin, Bioresmethrin, Cyhalotrin, Cypermethrin, Deltamethrin, Fenpropathrin, Fenvalerate, Flucythrinate, Fluvalinate, Permethrin, Pyrethrine, Resmethrin, Tetramethrin, Tralomethrin.

Benzilsäureester

Brompropylat, Chlorbenzylat, Chlorpropylat.

Polycyclische Halogenkohlenwasserstoffe

Aldrin, Endosulfan.

Formamidine

Chlordimeform.

Dihydro-1,3-thiazol-2-yliden-aniline

N-(2,3-Dihdro-3-methyl-1,3-thiazol-2-yliden)-2,4-xylidin.

Sonstige

Methopren, Kinopren;
Flupropimorph, Tridemorph;
Bromoxynil;
Crimidine, Bupyrimate;
Sethoxydim;
Chlorphenprop-methyl;
Carboxin;
Buthiobate, Amithraz;
Dicofol;
Oxadiazon;
Prochloraz;
Propargite;
Dicamba;
Camphechlor;
Chlorfenson.

Die nach dem erfindungsgemässen Verfahren herstellbaren Mikrokapseln können die vorgenannten pestiziden Wirkstoffe einzeln oder als Kombinationen von zwei und mehr pestiziden Wirkstoffen enthalten.

Das erfindungsgemässe Verfahren zur Herstellung von Mikrokapseln wird vorteilhaft in der Weise durchgeführt, dass man zunächst den anionischen Dispergator und das nichtionische Schutzkolloid und/oder das nichtionische Tensid in Wasser löst und anschliessend eine Lösung eines oder mehrerer Polyisocyanate der vorgenannten Art in einer oder mehreren der vorgenannten pestiziden Wirksubstanzen oder in einer Lösung einer oder mehrerer dieser Wirksubstanzen in einem mit Wasser nicht mischbaren Lösungsmittel zugibt und bis zur Entstehung einer homogenen Dispersion intensiv rührt. Dann fügt man unter weiterem Rühren ein oder mehrere Polyamine der oben genannten Art zu und rührt die Mischung bis zur vollständigen Umsetzung des Polyamins mit dem Isocyanat weiter. Die Polyamine werden vorteilhaft als wässrige Lösung zugesetzt.

Das erfindungsgemässe Verfahren kann bei Raumtemperatur oder mässig erhöhter Temperatur durchgeführt werden. Geeignete Temperaturen liegen im Bereich von 10-75 ° C. Vorzugsweise wird das erfindungsgemässe Verfahren im Temperaturbereich von 20-45 ° C durchgeführt.

Die Reaktionszeiten des Polyisocyanats mit dem Polyamin beträgt in der Regel 2 - 30 Minuten. Der jeweilige Grad der Umsetzung und das Ende der Reaktion können durch Titration des in der wässrigen Phase vorliegenden freien Amins festgestellt werden.

Die zur Bildung der Kapselwand benötigten Komponenten können im allgemeinen in einer Menge von 2,5-30 Gew.-% vorzugsweise 5 - 20 Gew.% bezogen auf das einzukapselnde Material eingesetzt werden, wobei das einzukapselnde Material aus einer Wirksubstanz oder einem Gemisch von zwei und mehreren Wirksubstanzen oder aus einer Lösung einer Wirksubstanz oder einer Mischung von zwei und mehreren Wirksubstanzen in einem mit Wasser nicht-mischbaren Lösungsmittel bestehen kann. Die im Einzelfall verwendete Menge der zur Bildung der Kapselwand benötigten Komponenten hängt in erster Linie von der Wanddicke der herzustellenden Kapseln und ferner auch von der Kapselgrösse ab.

Nach dem erfindungsgemässen Verfahren können wässerige Suspensionen von Mikrokapseln hergestellt werden, die pro Liter 100-700 g Mikrokapseln enthalten. Vorzugsweise enthalten die nach dem erfindungsgemässen Verfahren herstellbaren Suspensionen 400-600 g Mikrokapseln pro Liter.

Die nach dem erfindungsgemässen Verfahren herstellbaren Suspensionen von Mikrokapseln sind unmittelbar gebrauchsfertig. Sie können jedoch für Transport und Lagerung durch weitere Zusätze, wie oberflächenaktive Mittel, Verdicker, Antischaummittel und Frostschutzmittel, stabilisiert werden.

Es ist jedoch auch möglich, die Mikrokapseln durch Filtrieren oder Zentrifugieren aus der unmittelbar erhaltenen Suspension abzutrennen und entweder zu trocknen oder erneut in eine Suspension überzuführen. Die aus der Suspension abgetrennten und getrockneten Mikrokapseln stellen ein rieselfähiges Pulver dar, das praktisch unbeschränkt lagerfähig ist.

Durch die erfindungsgemässe gleichzeitige Verwendung eines anionischen Dispergators und eines nichtionischen Schutzkolloids und/oder nichtionischen Tensids wird bereits beim Dispergieren der Lösung des Polyisocyanats im pestiziden Wirkstoff die insbesondere bei der alleinigen Verwendung eines anionischen Dispergators, wie Ligninsulfonat, auftretende starke Viskositätserhöhung vermieden. Dadurch wird nicht nur die Durchführung des Verfahrens erleichtert, sondern es wird gleichzeitig eine schnellere und vollständigere Umsetzung von Polyisocyanat und Polyamin erreicht, wodurch die Bildung unerwünschter Nebenprodukte weitgehend unterbunden wird. Durch die Verringerung der Viskosität des Reaktionsgemisches resultiert ferner bei gleicher Scherkraft eine feinere Dispersion und damit eine Verkleinerung des Durchmessers der hergestellten Kapseln. Die erfindungsgemäss hergestellten Kapselsuspensionen sind

stabil und zeigen auch bei längerer Lagerung keine Serum- und Sedimentbildung. Die erfindungsgemäss herstellbaren Suspensionen von Mikrokapseln zeigen ferner bei geeigneter Wahl von Art und Menge der anionischen und nichtionischen Dispergatoren thixotrope Eigenschaften und lassen sich daher durch Aufschütteln oder durch Rühren auf einfache Weise in einen leicht fliessfähigen Zustand bringen.

In den nachfolgenden Beispielen, die das erfindungsgemässe Verfahren näher erläutern, stehen die verwendeten Handelsnamen und andere nicht selbstverständliche Bezeichnungen für folgende Produkte:

Anionische Dispergatoren

Dispergator A: Natriumsalz eines Kondensationsprodukts von Naphthalinsulfonsäure mit Phenolsulfonsäure und Formaldehyd hergestellt nach Beispiel 1.

TAMOL® SN: Natriumsalz eines Kondensationsprodukts von Naphthalinsulfonsäure und Formaldehyd, Hersteller: Rohm and Haas Co.

Nichtionische Dispergatoren (Schutzkolloide)

MOWIOL® 18-88: Polyvinylalkohol mit einer Viskosität von 18 cp (gemessen in 4%iger wässriger Lösung bei 20°C), hergestellt durch Verseifung von Polyvinylacetat (Verseifungsgrad: 88 %), Hersteller: Hoechst AG.

MOWIOL® 40-88: Polyvinylalkohol mit einer Viskosität von 40 cp (gemessen in 4%iger wässriger Lösung bei 20°C), hergestellt durch Verseifung von Polyvinylacetat (Verseifungsgrad: 88 %), Hersteller: Hoechst AG.

Nichtionische Tenside

PLURONIC® F-108: Aethylenoxid-Propylenoxid-Blockpolymerisat der Formel

$$(EO)_x-(PO)_y-(EO)_z$$

mit einem Molekulargewicht von etwa 16000 und einem Aethylenoxidanteil von 80 %, Hersteller: BASF Wyandotte Corp.

PLURONIC® P-85: Aethylenoxid-Propylenoxid-Polymerisat der Formel

$$(EO)_x-(PO)_y-(EO)_z$$

mit einem Molekulargewicht von 4500 und einem Aethylenoxidanteil von 50 %, Hersteller: BASF Wyandotte Corp.

PLURONIC® L-42: Aethyxlenoxid-Propylenoxid-Blockpolymerisat der Formel

$$(EO)_x-(PO)_y-(EO)_z$$

mit einem Molekulargewicht von 1450 und einem Aethylenoxidanteil von 20 %, Hersteller: BASF Wyandotte Corp.

TETRONIC® 707: äthoxyliertes/propoxyliertes Aethylendiamin mit einem Molekulargewicht von 12000 und einem Aethylenoxidanteil von 70 %, Hersteller: BASF Wyandotte Corp.

ANTAROX® CO 710: Nonylphenolpolyglykoläther mit 10 Aethylenoxid-Einheiten, Hersteller: GAF.

GENAPOL® C-200: äthoxylierter Kokosfettalkohol mit 25 Aethylenoxid-Einheiten, Hersteller: Hoechst AG.

GENAMIN® T100: äthoxyliertes Talgfettamin mit 10 Aethylenoxid-Einheiten, Hersteller: Hoechst AG.

Lösungsmittel

SHELLSOL® AB: Gemisch ein- und mehrfach alkylierter aromatischer Kohlenwasserstoffe, Hersteller: Shell.

Beispiel 1: Herstellung von Dispergator A

Ausgangsmaterialien:
288 g (2,25 Mol) Naphthalin
144 g (1,53 Mol) Phenol
440 g (4,48 Mol) 100%ige Schwefelsäure
78,5 g (0,97 Mol) 37%ige wässrige Formaldehydlösung
370 g (4,4 Mol) 48%ige wässrige Natronlauge

Das Naphthalin wird in einem Rührgefäss geschmolzen und nach Zugabe der Schwefelsäure 4 Stunden auf 120-125°C erhitzt. Dann wird das Phenol zugegeben und die Temperatur eine weitere Stunde auf 120-125°C gehalten. Anschliessend wird das Reaktionsgefäss auf einen Druck von 15 bar evakuiert, die Temperatur langsam auf 160°C gesteigert und 3 Stunden dort gehalten, wobei Reaktionswasser durch Destillation abgetrennt wird. Danach wird das Reaktionsgemisch auf 105-110°C abgekühlt und durch Rühren homogenisiert. Dann wird durch vorsichtige Zugabe von 200 g Eis auf 90°C abgekühlt, wobei die Homogenität des Gemisches durch ständiges Rühren aufrecht erhalten wird. Danach wird während einer Stunde die Formaldehydlösung bei 90-95°C zugegeben und 3 Stunden bei 95°C nachgerührt. Eine Probe des Reaktionsgemisches bildet nun mit Wasser eine klare 5%ige Lösung und riecht nicht mehr nach Formaldehyd. Nun wird das Reaktionsgemisch durch Zugabe von je 60 g Eis und 60 g Wasser auf 80°C abgekühlt. Nach Zugabe von weiteren 180 ml Wasser wird mit etwa 230-250 ml 48%iger Natronlauge bei einer Temperatur von 80°C neutralisiert. Dann ist der der pH-Wert einer 10%igen Lösung einer Probe des Reaktionsgemisches etwa 6,5. Das Reaktionsgemisch wird nun im Vakuum zur Trockene eingedampft und granuliert. Auf diese Weise werden 900 g Dispergator A in Form eines wasserlöslichen Granulats erhalten.

Beispiel 2: In einem 2-Liter Becherglas wird eine Lösung von 360 g N-Chloracetyl-N-(1-methyl-2-methoxyäthyl)-2,6-dimethylanilin und 70,8 g Diphenylmethan-4,4'-diisocyanat in 353 g SHELLSOL® AB unter Verwendung eines Schnellrührers in einer Lösung von 15 g Dispergator A und 15 g MOWIOL® 18-88 (in Form einer 10%igen wässrigen Lösung) in 360 g Wasser bei 27-33°C dispergiert. Nach etwa einer Minute werden unter weiterem Rühren 30,8 g Hexamethylendiamin (in Form einer 40%igen wässrigen Lösung zugesetzt, wobei die Temperatur auf etwa 40°C steigt. Nach Zugabe des Hexamethylendiamins wird eine Stunde langsam weitergerührt, wobei sich das Reaktionsgemisch auf Raumtemperatur abkühlt. Die gebildete Suspension wird durch Zugabe von 15 g PLURONIC® F-108 stabilisiert. Man erhält eine niedrigviskose Suspension von Mikrokapseln mit Kapseldurchmessern von 2-20 µm.

Beispiel 3: Eine Lösung von 37,3 g Diphenylmethan-4,4'-diisocyanatin 480 g Metolachlor wird unter Verwendung eines Schnellrührers in einer Lösung von 7,5 g Dispergator A und 7,5 g MOWIOL® 40-88 (in Form einer 10%igen wässrigen Lösung) in 232,5 g Wasser dispergiert, wobei die Temperatur um 3-5°C ansteigt. Anschliessend werden unter weiterem Rühren 16,4 g Hexamethylendiamin (in Form einer 40%igen wässrigen Lösung) zugesetzt, wobei die Temperatur um weitere 8-12°C ansteigt. Nach Zugabe des Hexamethylendiamins wird eine Stunde nachgerührt und die auf Raumtemperatur abgekühlte Suspension mit 8,7 g PLURONIC® F-108 stabilisiert. Man erhält eine dünnflüssige lagerstabile Kapselsuspension mit einer Kapselgrössen von 2-30 µm.

Beispiel 4: In einem 2-Liter Becherglas wird eine Lösung von 87 g Diphenylmethan-4,4'-diisocyanat in 1080 g Diazinon unter Verwendung eines Schnellrührers in einer Lösung von 9,0 g Dispergator A und 9,0 g MOWIOL® 18-88 (in Form einer 10%igen wässrigen Lösung) in 392 g Wasser dispergiert. Nach etwa einer Minute werden 38 g Hexamethylendiamin (in Form einer 40%igen wässrigen Lösung) zugegeben, wobei die Temperatur um 5-8°C ansteigt. Es wird eine Stunde nachgerührt und die entstandene Kapselsuspension durch Zugabe einer Lösung von 29 g GENAMIN® T 100 in 80 g Wasser stabilisiert. Man erhält eine stabile Kapselsuspension mit einer Viskosität von 700-1200 cp und einer mittleren Teilchengrösse von 2-5 µm.

Das Verhältnis von Dispergator zu MOWIOL® 18-88 kann bei praktisch gleichbleibender Qualität der gebildeten Suspension von Mikrokapseln im Bereich von 3:1 bis 1:3 variiert werden.

Beispiel 5: Eine Lösung von 8,1 g Diphenylmethan-4,4'-diisocyanat in 100 g Furathiocarb wird unter Verwendung eines Schnellrührers in einer Lösung von 1,5 g Dispergator A und 1,5 g MOWIOL® 18-88 (in Form einer 10%igen wässrigen Lösung) in 55 g Wasser bei 50°C dispergiert. Der Dispersion werden unter weiterem Rühren 3,5 g Hexamethylendiamin (in Form einer 40%igen wässrigen Lösung) zugesetzt, wobei sich die Temperatur der Mischung um etwa 3°C erhöht. Nach Zugabe des Hexamethylendiamins wird eine Stunde weitergerührt, wobei sich die entstandene Suspension von Mikrokapseln auf Raumtemperatur abkühlt. Nach Zugabe von 10 g GENAMIN® T 100 erhält man eine dünnflüssige, lagerfähige Suspension von Mikrokapseln. Die mittlere Kapselgrösse beträgt 2-50 µm.

Beispiel 6: In einem Becherglas wird eine Lösung von 6,3 g Diphenylmethan-4,4'-diisocyanat und 24 g N-(2,3-Dihydro-3-methyl-1,3-thiazol-2-yliden)-3,4-xylidin in 47,2 g SHELLSOL® AB unter Verwendung eines Schnellrührers in einer Lösung von 0,83 g Dispergator A und 0,83 g MOWIOL® 40-88 (in Form einer 10%igen wässrigen Lösung) in 58 g Wasser bei Raumtemperatur dispergiert. Anschliessend werden 6,8 g Hexamethylendiamin (in Form einer 40%igen wässrigen Lösung) zugesetzt, wobei sich die Temperatur um etwa 2°C erhöht. Nach Zugabe des Hexamethylendiamins wird eine Stunde nachgerührt, wobei sich die gebildete Kapselsuspension auf Raumtemperatur abkühlt. Man erhält eine gut fliessfähige Suspension von Mikrokapseln mit einer Viskosität von 150-300 cp, in der die mittlere Kapselgrösse von 5-20 µm beträgt.

Beispiel 7: In einem Becherglas wird bei Raumtemperatur eine Lösung von 8,5 g Diphenylmethan-4,4'-diisocyanat in 100 g Profenofos und Verwendung eines Schnellrührers in einer Lösung von 1 g Dispergator A und 1 g MOWIOL® 18-88 in 70 g Wasser dispergiert. Anschliessend werden unter weiterem Rühren 3,7 g Hexamethylendiamin (in Form einer 40%igen wässrigen Lösung) zugesetzt und eine Stunde nachgerührt. Man erhält eine stabile Suspension von Mikrokapseln mit guter Suspendierbarkeit und einer Viskosität von etwa 100 cp. Die mittlere Kapselgrösse beträgt 5-15 µm.

Beispiel 8: Eine Lösung von 19,7 g Diphenylmethan-4,4'-diisocyanatin 80 g Isazofos wird unter Verwendung eines Schnellrührers bei Raumtemperatur in einer Lösung von 8 g Dispergator A und 0,8 g MOWIOL® 18-88 in 44,2 g Wasser dispergiert. Dann werden der erhaltenen Dispersion 8,6 g Hexamethylendiamin (in Form einer 40%igen wässrigen Lösung) zugesetzt, wobei die Temperatur um etwa 10°C ansteigt. Die Mischung wird noch 30 Minuten bei Raumtemperatur nachgerührt. Man erhält eine stabile Suspension von Mikrokapseln mit einem Gehalt von 35 Gew.-% Polyharnstoff bezogen auf die eingesetzte Menge Wirksubstanz.

Beispiel 9: Eine Mischung von 8,1 g Diphenylmethan-4,4'-diisocyanat, 80 g Propiconazol und 15,4 g Xylol wird unter intensiven Rühren in einer Lösung von 1,6 g Dispergator A, 0.8 g MOWIOL® 18-88 und 0,8 g PLURONIC® F 108 in 58,6 g Wasser bei Raumtemperatur dispergiert. Danach werden 3,3 g Hexamethylendiamin (in Form einer 40%igen wässrigen Lösung) zugegeben und 1 Stunde nachgerührt. Man erhält eine dünnflüssige stabile wässrige Suspension von Mikrokapseln mit einem mittleren Kapseldurchmesser von 2-3 µm. Der Wirkstoffgehalt der Suspension liegt bei 46 Gew.-%.

Beispiel 10: Eine Lösung von 42,5 g Xylol und 44,5 g Diphenylmethan-4,4'-diisocyanat in 480 g Propiconazol wird unter intensivem Rühren bei Raumtemperatur in einer Lösung von 20 g Dispergator A und 8 g PLURONIC® F 108 in 247,6 g Wasser dispergiert. Danach werden 18,4 g Hexamethylendiamin (in Form einer 40%igen wässrigen Lösung) zugesetzt, wobei die Temperatur um etwa 10°C steigt. Die Mischung wird bis zur Abkühlung auf Raumtemperatur nachgerührt. Man erhält eine stabile dünnflüssige Suspension von Mikrokapseln mit einer mitteleren Kapselgrösse von 3-5 µm und einem Wirkstoffgehalt von 54 Gew.-%.

Beispiel 11: Eine Lösung von 75,4 g Diphenylmethan-4,4'-diisocyanat in 463,7 g Metolachlor wird unter intensivem Rühren bei Raumtemperatur in einer Lösung von 15 g Polystyrolsulfonsäure-natriumsalz und 10 g PLURONIC® F 108 in 328 g Wasser dispergiert. Dann werden 32,8 g Hexamethylendiamin (in Form einer 40%igen wässrigen Lösung) zugegeben, wobei die Temperatur um etwa 15°C ansteigt. Die Mischung wird bis zur Abkühlung auf Raumtemperatur weitergerührt. Man erhält eine Suspension von Mikrokapseln mit einer mittleren Kapselgrösse von 1-2 µm.

Beispiel 12: Eine Lösung von 8,1 g Diphenylmethan-4,4'-diisocyanatin 100 g Metolachlor wird unter intensivem Rühren bei Raumtemperatur in einer Lösung von 1,5 g Polystyrolsulfonsäure-natriumsalz und 1,5 g MOWIOL® 40-88 in 76,6 g Wasser dispergiert. Anschliessend werden 3,5 g Hexamethylendiamin (in Form einer 40%igen wässrigen Lösung) zugefügt, wobei die Temperatur um etwa 10°C ansteigt. Die Mischung wird 1 Stunde nachgerührt. Man erhält eine stabile Suspension von Mikrokapseln mit einer mittleren Kapselgrösse von 1-2 µm.

Beispiel 13: Eine Lösung von 6,5 g Diphenylmethan-4,4'-diisocyanatin 80 g Metolachlor wird unter intensivem Rühren bei Raumtemperatur in einer Lösung von 1,6 g Dispergator A und 1,6 g GENAPOL® C-200 in 61 g Wasser dispergiert. Danach werden 2,7 g Hexamethylendiamin (in Form einer 40%igen wässrigen Lösung) zugesetzt, wobei die Temperatur um 7°C ansteigt. Die Mischung wird bis zur Abkühlung auf Raumtemperatur nachgerührt. Man erhält eine Suspension von Mikrokapseln mit einer Viskosität von 150 cp und einer mittleren Kapselgrösse von 5-6 µm. Die Kapselsuspension verteilt sich beim verdünnen mit Wasser spontan.

Beispiel 14: Man verfährt wie im Beispiel 13, verwendet jedoch anstelle von GENAPOL® C-200 ANTAROX® CO 710. Bei der Zugabe des Hexamethylendiamins steigt die Temperatur um 6°C an. Man erhält eine Suspension von Mikrokapseln mit einer Viskosität von 880 cp und einer mittleren Kapselgrösse von 5 µm, die sich beim verdünnen mit Wasser spontan verteilt.

Beispiel 15: Man verfährt wie im Beispiel 13, verwendet jedoch anstelle von GENAPOL® C-200 ein

äthoxyliertes Dinonylphenol mit 150 Ethylenoxid-Einheiten. Nach Zugabe des Hexamethylendiamins steigt die Temperatur um 5°C an. Man erhält eine Suspension von Mikrokapseln mit einer Viskosität 65 cp und einer mittleren Kapselgrösse von 4 µm, die sich beim verdünnen mit Wasser spontan verteilt.

Beispiel 16: Man verfährt wie in Beispiel 13, verwendet jedoch anstelle von GENAPOL® C-200 PLURONIC® P-85. Man erhält eine Suspension von Mikrokapseln mit einer Viskosität von 30 cp und einer mittleren Kapselgrösse von 4 µm, die sich beim verdünnen mit Wasser spontan verteilt.

Beispiel 17: Man verfährt wie in Beispiel 13, verwendet jedoch anstelle von GENAPOL® C-200 PLURONIC® L-42. Die erhaltene Suspension ist zunächst dünnflüssig, verdickt jedoch innerhalb von 24 Stunden auf eine Viskosität von 1600 cp. Die Suspension ist leicht aufschüttelbar. Die mittlere Kapselgrösse beträgt 3,5-4 µm.

Beispiel 18: Man verfährt wie in Beispiel 13, verwendet jedoch anstelle von GENAPOL® C-200 TETRONIC® 707. Bei der Zugabe des Hexamethylendiamins steigt die Temperatur um 5°C an. Man erhält eine Suspension von Mikrokapseln mit einer Viskosität von 500 cp und einer mittleren Kapselgrösse von 5 µm, die sich beim verdünnen mit Wasser spontan verteilt.

Beispiel 19: Eine Lösung von 75,4 g Diphenylmethan-4,4'-diisocyanat in 463,7 g Metolachlor wird bei Zimmertemperatur unter intensivem Rühren in einer Lösung von 15 g Dispergator A und 10 g PLURONIC® F 108 in 360 g Wasser dispergiert. Dann werden 32,8 g Hexamethylendiamin (in Form einer 40%igen wässrigen Lösung) zugegeben, wobei die Temperatur um etwa 15°C ansteigt. Die Mischung wird bis zur Abkühlung auf Raumtemperatur weitergerührt. Man erhält eine Suspension von Mikrokapseln mit einer Viskosität von 60 cp und einen mittleren Kapseldurchmesser von 2 µm.

Beispiel 20: Eine Lösung von 35,5 g Polymethylenpolyphenylisocyanat (MONDUR® MR (Mobay Chemical Company)) in 465 g Metolachlor wird in einem 1,5 l Becherglas bei Raumtemperatur mit einem Schnellrührer in einer Lösung von 20 g TAMOL® SN, 10 g PLURONIC® F 108 und 50 g Aethylenglykol in 348,5 g Wasser dispergiert. Die Mischung wird 2 Minuten gerührt wobei die Temperatur um 3-15°C ansteigt. Danach wird in der Dispersion 15,5 g Hexamethylendiamin (in Form einer 40%igen wässrigen Lösung) zugesetzt, wobei die Temperatur um weitere 7-12°C. Die gebildete Suspension von Mikrokapseln wird eine weitere Stunde gerührt und dann mit Salzsäure auf pH 7 eingestellt. Nach Zugabe von 19,5 g einer 3,6 %igen Dispersion von Xantam (Polysaccharid) wird eine lagerstabile Suspension von Mikrokapseln mit einer Viskosität von 200-500 cp erhalten. Der Kapseldurchmesser beträgt je nach Rührgeschwindigkeit 4-30 µm.

Beispiel 21: Eine Lösung von 39 g Polymethylenpolyphenylisocyanat (PAPI® 135) in 511 g Isazophos werden in einem 1,5 l Becherglas bei Raumtemperatur unter Verwendung eines Schnellrührers in einer Lösung von 22 g TAMOL® SN, 11 g PLURONIC® F 108 und 55 g Aethylenglykol in 372,4 g Wasser dispergiert. Die Dispersion wird 2 Minuten gerührt, wobei die Temperatur um 10-15°C steigt. Dann werden 15,5 g Hexamethylendiamin (in Form einer 40%igen wässrigen Lösung) zugesetzt, wobei die Temperatur um weitere 7-12°C steigt. Es wird 1 Stunde nachgerührt und dann mit Salzsäure auf pH 7 neutralisiert. Nach Zugabe von 19,5 g einer 3,6%igen Dispersion von Xantham (Polysaccharid) in Wasser erhält man eine lagerstabile Suspension von Mikrokapseln mit einer Viskosität von 200-500 cp. Der durchschnittliche Kapseldurchmesser beträgt je nach Rührgeschwindigkeit 2-8 µm.

Beispiel 22: Eine Lösung von 20,4 g Dichlormethan und 7,5 g Diphenylmethan-4,4'-diisocyanat in 80 g N-Chloracetyl-N-(1-methyl-2-methoxyaethyl)-2,6-dimethylanilinwird unter intensivem Rühren bei Raumtemperatur in eidner Lösung von 1,8 g Dispergator A und 1,8 g PLURONIC® F 108 in 66,9 g Wasser dispergiert. Danach werden 3,1 g Hexamethylendiamin (in Form einer 40%igen Lösung) zugesetzt, wobei die Temperatur um etwa 10°C ansteigt. Man erhält eine stabile dünnflüssige Suspension von Mikrokapseln mit einer mittleren Kapselgrösse von 2-4 µm und einem Wirksoffgehalt von 43 Gew.-%.

Beispiel 23: Eine Lösung von 18 g Diphenylmethan-4'4-diisocyanat in 96 g Chlorofenvinphos wird unter intensivem Rühren bei Raumtemperatur in einer Lösung von 1,6 g Dispergator A und 1,6 g PLURONIC® F 108 in 50,5 g Wasser dispergiert. Danach werden 7,4 g Hexamethylendiamin (in Form einer 40%igen wässrigen Lösung) zugesetzt, wobei die Temperatur um 20-30°C steigt. Die Mischung wird bis zur Abkühlung auf Raumtemperatur nachgerührt. Man erhält eine stabilfde dünnflüssige Suspension vond Mikrokapseln (Viskosität = 150 cp) mit einer mittleren Teilchengrösse von 2-3 µm, eindem Wirkstoffgehalt von 51,5 Gew.-% und einem Kapselwandanteidl von 13,6 Gew.-%.

Beispiel 24: Eine Lösung von 87 g Diphenylmethan-4,4'-diisocyanat in 1080 g Diazinon wird unter intensivem Rühren bei Raumtemperatur in einer Lösung von 9,0 g Dispergator A, 3,0 g MOWIOL® 18-88 (in Form einer 10%igen wässrigen Lösung) und 6,0 g (PLURONIC F 108 in 446 g Wasser dispergiert. Danach werden 37,9 g Hexamethylendiamin (in Form einer 40%igen wässrigen Lösung) zugesetzt, wobei die Temperatur um 3-5°C ansteigt. Die erhaltene flüssige Suspension von Mikrokapseln mit einer mittleren Kapselgörsse von 1,5-2,5 µm hat eine Viskosität von 250-600 cp. Sie enthält 61,6 Gew.-% Wirksubstanz

und 7,1 Gew.-% Kapselwandanteil.

**Patentansprüche**

1. Verfahren zur Herstellung einer wässrigen Suspension von Mikrokapseln mit einer Kapselwand aus Polyharnstoff, die ein mit Wasser nicht mischbares Pestizid einschliessen, durch Dispergieren einer Lösung eines Polyisocyanats in dem in Wasser schwer löslichen Pestizid in Wasser und nachfolgende Umsetzung der Dispersion mit einem Polyamin, dadurch gekennzeichnet, dass man das Dispergieren der Lösung des Polyisocyanats in dem in Wasser schwer löslichen Pestizid in Wasser und die nachfolgende Umsetzung der Dispersion mit dem Polyamin in Gegenwart eines anionischen Dispergators und mindestens eines nichtionischen Schutzkolloids und/oder eines nichtionischen Tensids durchführt.

2. Verfahren nach Anspruch 1, dadurch gekennzeichnet, dass man als anionischen Dispergator ein Salz der Polystyrolsulfonsäure, ein Salz der Polyvinylsulfonsäure, ein Salz eines Kondensationsprodukts von Naphthalinsulfonsäure und Formaldehyd, ein Salz eines Kondensationsprodukts von Naphthalinsulfonsäure mit Phenolsulfonsäure und Formaldehyd oder ein Salz der Ligninsulfonsäure verwendet.

3. Verfahren nach Anspruch 2, dadurch gekennzeichnet, dass man als anionischen Dispergator ein Salz der Polystyrolsulfonsäure, ein Salz eines Kondensationsprodukts von Naphthalinsulfonsäure mit Formaldehyd oder ein Salz eines Kondensationsprodukts von Naphthalinsulfonsäure mit Phenolsulfonsäure und Formaldehyd verwendet.

4. Verfahren nach Anspruch 2, dadurch gekennzeichnet, dass man als anionischen Dispergator ein Salz eines Kondensationsprodukts von Naphthalinsulfonsäure mit Phenolsulfonsäure und Formaldehyd verwendet.

5. Verfahren nach Anspruch 1, dadurch gekennzeichnet, dass man als nichtionischen Schutzkolloid ein wasserlösliches Polymeres mit einem Molekulargewicht von 10 000 - 200 000 verwendet.

6. Verfahren nach Anspruch 5, dadurch gekennzeichnet, dass man als nichtionisches Schutzkolloid ein Polymeres der Gruppe Polyvinylalkohol, Polyvinylmethyläther, Polyvinylpyrrolidon, Hydroxyäthylcellulose, Hydroxypropylcellulose, Methylcellulose, Hydroxyäthylcellulose, Hydroxypropylmethylcellulose, Poly-(2-hydroxyethyl)-methacrylat, Poly-[2-(2-hydroxyethoxy)-ethyl)-methacrylat, Polyäthylenoxid, und Polyallylalkohol verwendet.

7. Verfahren nach Anspruch 5, dadurch gekennzeichnet, dass man als nichtionisches Schutzkolloid Polyvinylalkohol verwendet.

8. Verfahren nach Anspruch 6, dadurch gekennzeichnet, dass man als nichtionisches Schutzkolloid einen Polyvinylalkohol mit einer Viskosität von 4-60 cp (gemessen an 4%igen wässrigen Lösungen bei 20 °C) verwendet, der durch Verseifung von Polyvinylacetat mit einem Verseifungsgrad von 80-95 % hergestellt wurde.

9. Verfahren nach Anspruch 1, dadurch gekennzeichnet, dass man als nichtionisches Tensid ein durch Umsetzung von Aethylenoxid oder durch kombinierte Umsetzung von Ethylenoxyd mit Propylenoxyd mit einer Substanz aus der Gruppe Fettalkohole, Alkylphenole, Fettsauren, Fettsäureester von Polyhydroxyverbindungen, Fettsäureamide und Fettaminen hergestelltes Produkt verwendet.

10. Verfahren nach Anspruch 9, dadurch gekennzeichnet, dass man als nichtionisches Tensid ein Aethylenoxid-Propylenoxid-Blockpolymerisat, ein N,N,N',N'-Tetra(polyäthoxypolypropoxyäthyl)-äthylendiamin, einen Nonylphenolpolyglykoläther, einen äthoxylierten Fettalkohol oder ein äthoxiliertes Fettamin verwendet.

11. Verfahren nach Anspruch 9, dadurch gekennzeichnet, dass man als nichtionisches Tensid ein Aethylenoxid-Propylenoxid-Blockpolymerisat verwendet.

12. Verfahren nach Anspruch 1, dadurch gekennzeichnet, dass man ein Polyisocyanat aus der Gruppe

Tetramethylendiisocyanat, Pentamethylendiisocyanat, Hexamethylendiisocyanat, Toluylendiisocyanat, Diphenylmethan-4,4'-diisocyanat, Polymethylenpolyphenylisocyanat, 2,4,4'-Diphenyläthertriisocyanat, 3,3'-Dimethyl-4,4'-diphenyldiisocyanat, 3,3'-Dimethoxy-4,4'-diphenyldiisocyanat, 1,5-Napthylendiisocyanat, 4,4',4''-Triphenylmethantriisocyanat, und Isophorondiisocyanat verwendet.

**13.** Verfahren nach Anspruch 12, dadurch gekennzeichnet, dass man als Polyisocyanat Diphenylmethan-4,4'-diisocyanat oder Polymethylenpolyphenylisocyanat verwendet.

**14.** Verfahren nach Anspruch 1, dadurch gekennzeichnet, dass man ein Polyamin aus der Gruppe Aethylendiamin, Propylen-1,3-diamin, Tetramethylendiamin, Pentamethylendiamin, Hexamethylendiamin, Diäthylentriamin, Triäthylentetramin, Tetraäthylenpentamin, Pentaäthylenhexamin, 4,9-Dioxadecan-1,12-diamin, 1,3-Phenylendiamin, 2,4-Toluylendiamin, 4,4'-Diaminodiphenylmethan, 1,5-Diaminonaphthalin, 1,3,5-Triaminobenzol, 2,4,6-Triaminotoluol, 1,3,6-Triaminonaphthalin, 2,4,4'-Triaminodiphenyläther, 3,4,5-Triamino-1,2,4-triazol und 1,4,5,8-Tetraaminoanthrachinon verwendet.

**15.** Verfahren nach Anspruch 14, dadurch gekennzeichnet, dass man Hexamethylendiamin verwendet.

**16.** Verfahren nach Anspruch 1, dadurch gekennzeichnet, dass man ein Pestizid aus der Gruppe s-Triazine, Harnstoffe, Halogenacetanilide, Diphenylätherderivate, Phenoxypropionsäurederivate, Dinitroaniline, Acylalanine, Triazolderivate, Carbamate, Phosphorsäureester, Pyrethroide, Benzylsäureester, polycyclische Halogenkohlenwasserstoffe, Formamidine und Dihydro-1,3-thiazol-2-yliden-aniline verwendet.

**17.** Verfahren nach Anspruch 1, dadurch gekennzeichnet, dass man bei Temperaturen im Bereich von 10-75 ° C arbeitet.

**18.** Verfahren nach Anspruch 17, dadurch gekennzeichnet, dass man bei Temperaturen von 20-45 ° C arbeitet.

**19.** Verfahren nach Anspruch 1, dadurch gekennzeichnet, dass man die zur Bildung der Kapselwand benötigten Komponenten in einer Menge von 2,5-30 Gew.-% bezogen auf das einzukapselnde Material einsetzt.

**20.** Verfahren nach Anspruch 19, dadurch gekennzeichnet, dass man die zur Bildung der Kapselwand benötigten Komponenten in einer Menge von 5-20 Gew.-% bezogen auf das einzukapselnde Material einsetzt.

**21.** Verfahren nach Anspruch 1, dadurch gekennzeichnet, dass man neben den verwendeten Mengen an anionischem Dispergator und nichtionischen Schutzkolloid und/oder nichtionischen Tensid eine solche Menge Wasser verwendet, dass eine Suspension von Mikrokapseln entsteht, die 100-700 g Mikrokapseln pro Liter enthält.

**22.** Verfahren nach Anspruch 21, dadurch gekennzeichnet, dass man neben den verwendeten Mengen an anionischem Dispergator und nichtionischen Schutzkolloid und/oder nichtionischen Tensid eine solche Wassermenge verwendet, dass eine Suspension von Mikrokapseln entsteht, die 400-600 g Mikrokapseln pro Liter enthält.

## Claims

**1.** A process for the preparation of an aqueous suspension of microcapsules having a capsule wall of polyurea and encapsulating a water-immiscible pesticide, by dispersing a solution of a polyisocyanate in the sparingly water-soluble pesticide in water and subsequently reacting the dispersion with a polyamine, which process comprises effecting the dispersion of the solution of the polyisocyanate in the sparingly water-soluble pesticide in water and the subsequent reaction of the dispersion with the polyamine in the presence of an anionic dispersant and of at least one nonionic protective colloid and/or of a nonionic surfactant.

**2.** A process according to claim 1, which comprises the use of an anionic dispersant which is a salt of polystyrenesulfonic acid, a salt of polyvinylsulfonic acid, a salt of a condensate of naphthalenesulfonic

acid and formaldehyde, a salt of a condensate of naphthalenesulfonic acid with phenolsulfonic acid and formaldehyde, or a salt of ligninsulfonic acid.

**3.** A process according to claim 2, which comprises the use of an anionic dispersant which is a salt of polystyrenesulfonic acid, a salt of a condensate of naphthalenesulfonic acid with formaldehyde or a salt of a condensate of naphthalenesulfonic acid with phenolsulfonic acid and formaldehyde.

**4.** A process according to claim 2, which comprises the use of an anionic dispersant which is a salt of a condensate of naphthalenesulfonic acid with phenolsulfonic acid and formaldehyde.

**5.** A process according to claim 1, which comprises the use of a nonionic protective colloid which is a water-soluble polymer with a molecular weight of 10 000 to 200 000.

**6.** A process according to claim 5, which comprises the use of a nonionic protective colloid which is a polymer selected from the group consisting of polyvinyl alcohol, polyvinyl methyl ether, polyvinylpyrrolidone, hydroxyethyl cellulose, hydroxypropyl cellulose, methyl cellulose, hydroxyethyl cellulose, hydroxypropylmethyl cellulose, poly(2-hydroxyethyl)methacrylate, poly[2-(2-hydroxyethoxy)ethyl]-methacrylate, polyethylene oxide and polyallyl alcohol.

**7.** A process according to claim 5, wherein polyvinyl alcohol is used as nonionic protective colloid.

**8.** A process according to claim 6, which comprises the use of a nonionic protective colloid which is a polyvinyl alcohol with a viscosity of 4-60 cp (measured in 4 % aqueous solutions at 20° C) and which has been prepared by saponifying polyvinyl acetate to a degree of saponification of 80-95 %.

**9.** A process according to claim 1, which comprises the use of a nonionic surfactant which is a product obtained by reaction of ethylene oxide, or by combined reaction of ethylene oxide and propylene oxide, with a substance selected from the group consisting of fatty alcohols, alkylphenols, fatty acids, fatty acid esters of polyhydroxy compounds, fatty acid amides and fatty amines.

**10.** A process according to claim 9, which comprises the use of a nonionic surfactant which is an ethylene oxide/propylene oxide block polymer, an N,N,N',N'-tetra(polyethoxypolypropoxyethyl)ethylenediamine, a nonylphenol polyglycol ether, an ethoxylated fatty alcohol or an ethoxylated fatty amine.

**11.** A process according to claim 9, which comprises the use of a nonionic surfactant which is an ethylene oxide/propylene oxide block polymer.

**12.** A process according to claim 1, which comprises using a polyisocyanate selected from the group consisting of tetramethylene diisocyanate, pentamethylene diisocyanate, hexamethylene diisocyanate, toluylene diisocyanate, diphenylmethane-4,4'-diisocyanate, polymethylene polyphenylisocyanate, 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate, 4,4',4''-triphenylmethane triisocyanate and isophorone diisocyanate.

**13.** A process according to claim 12, which comprises using diphenylmethane-4,4'-diisocyanate or polymethylene polyphenylisocyanate as polyisocyanate.

**14.** A process according to claim 1, which comprises using a polyamine selected from the group consisting of ethylenediamine, propylene-1,3-diamine, tetramethylenediamine, pentamethylenediamine, hexamethylenediamine, diethylenetriamine, triethylenetetramine, tetraethylenepentamine, pentaethylenehexamine, 4,9-dioxadodecane-1,12-diamine, 1,3-phenylenediamine, 2,4-toluylenediamine, 4,4'-diaminodiphenylmethane, 1,5-diaminonaphthalene, 1,3,5-triaminobenzene, 2,4,6-triaminotoluene, 1,3,6-triaminonaphthalene, 2,4,4'-triaminodiphenyl ether, 3,4,5-triamino-1,2,4-triazole and 1,4,5,8-tetraaminoanthraquinone.

**15.** A process according to claim 14, wherein hexamethylenediamine is used.

**16.** A process according to claim 1, which comprises using a pesticide selected from the group consisting

of s-triazines, ureas, haloacetanilides, diphenyl ether derivatives, phenoxypropionic acid derivatives, dinitroanilines, acylalanines, triazole derivatives, carbamates, phosphoric acid esters, pyrethroids, benzilic acid esters, polycyclic halogenated hydrocarbons, formamidines and dihydro-1,3-thiazol-2-ylidene anilines.

**17.** A process according to claim 1, wherein the process is carried out in the temperature range from 10°-75°C.

**18.** A process according to claim 17, wherein the process is carried out in the temperature range from 20°-45°C.

**19.** A process according to claim 1, wherein the components required to form the capsule wall are employed in an amount of 2.5 to 30 % by weight, based on the material to be encapsulated.

**20.** A process according to claim 19, wherein the components required to form the capsule wall are employed in an amount of 5 to 20 % by weight, based on the material to be encapsulated.

**21.** A process according to claim 1, which comprises using in addition to the amounts of anionic dispersant and nonionic protective colloid and/or nonionic surfactant an amount of water sufficient to form a suspension of microcapsules which contains 100 to 700 g of microcapsules per litre.

**22.** A process according to claim 21, which comprises using in addition to the amounts of anionic dispersant and nonionic protective colloid and/or nonionic surfactant an amount of water sufficient to form a suspension of microcapsules which contains 400 to 600 g of microcapsules per litre.

## Revendications

**1.** Procédé pour la préparation d'une suspension aqueuse de microcapsules ayant une paroi de capsules en polyurée, qui comprennent un pesticide non-miscible à l'eau, par dispersion d'une solution d'un polyisocyanate dans le pesticide difficilement soluble dans l'eau dans de l'eau et ensuite réaction de la dispersion avec une polyamine, caractérisé en ce qu'on effectue la dispersion de la solution du polyisocyanate dans le pesticide difficilement soluble dans l'eau dans de l'eau et la réaction subséquente de la dispersion avec la polyamine en présence d'un agent dispersant anionique et d'au moins un colloïde protecteur non-ionique et/ou un agent de surface non-ionique.

**2.** Procédé selon la revendication 1, caractérisé en ce qu'on utilise comme agent dispersant anionique un sel d'acide polystyrènesulfonique, un sel d'acide polyvinylsulfonique, un sel d'un produit de condensation d'acide naphtalènesulfonique et de formaldéhyde, un sel d'un produit de condensation d'acide naphtalènesulfonique avec de l'acide phénolsulfonique et du formaldéhyde ou un sel de l'acide lignosulfonique.

**3.** Procédé selon la revendication 2, caractérisé en ce qu'on utilise comme agent dispersant anionique un sel d'acide polystyrènesulfonique, un sel d'un produit de condensation d'acide naphatalènesulfonique avec du formaldéhyde ou un sel d'un produit de condensation d' acide naphtalènesulfonique avec de l'acide phénolsulfonique et du formaldéhyde.

**4.** Procédé selon la revendication 2, caractérisé en ce qu'on utilise comme agent dispersant anionique un sel d'un produit de condensation d'acide naphtalènesulfonique avec de l'acide phénolsulfonique et du formaldéhyde.

**5.** Procédé selon la revendication 1, caractérisé en ce qu'on utilise comme colloïde protecteur non-ionique un polymère hydrosoluble ayant une masse moléculaire de 10 000 - 200 000.

**6.** Procédé selon la revendication 5, caractérisé en ce qu'on utilise comme colloïde protecteur non-ionique un polymère du groupe alcool polyvinylique, polyvinylméthyléther, polyvinylpyrrolidone, hydroxyéthylcellulose, hydroxypropylcellulose, méthylcellulose, hydroxyéthylméthylcellulose, hydroxypropylméthylcellulose, poly-(2-hydroxyéthyl)-méthacrylate, poly[2-(2-hydroxyéthoxy)-éthyl]-méthacrylate, polyoxyéthylène et poly(alcool allylique).

**7.** Procédé selon la revendication 5, caractérisé en ce qu'on utilise comme colloïde protecteur non-ionique de l'alcool polyvinylique.

**8.** Procédé selon la revendication 6, caractérisé en ce qu'on utilise comme colloïde protecteur non-ionique un alcool polyvinylique ayant une viscosité de 4-60 cp (mesurée sur des solutions aqueuses à 4% à 20 °C), qui a été préparé par saponification d'acétate polyvinylique avec un degré de saponification de 80-95%.

**9.** Procédé selon la revendication 1, caractérisé en ce qu'on utilise comme agent de surface non-ionique un produit préparé par réaction d'oxyde d'éthylène ou par réaction combinée d'oxyde d'éthylène et d'oxyde de propylène avec une substance choisie parmi les alcools gras, les alkylphénols, les acides gras, les esters d' acides gras de composés polyhydroxylés, les amides d' acides gras et les amines grasses.

**10.** Procédé selon la revendication 9, caractérisé en ce qu'on utilise comme agent de surface non-ionique un polymère séquencé d'oxyde d'éthylène-oxyde de propylène, une N,N,N',N'-tétra-(polyéthoxypolypropoxyéthyl)-éthylènediamine, un nonylphénolpolyglycoléther, un alcool gras éthoxylé ou une amine grasse éthoxylée.

**11.** Procédé selon la revendication 9, caractérisé en ce qu'on utilise comme agent de surface non-ionique un polymère séquencé d'oxyde d'éthylène-oxyde de propylène.

**12.** Procédé selon la revendication 1, caractérisé en ce qu'on utilise un polyisocyanate choisi parmi les suivants: tétraméthylènediisocyanate, pentaméthylènediisocyanate, hexaméthylènediisocyanate, toluylènediisocyanate, diphénylméthane-4,4'-diisocyanate, polyméthylènepolyphénylisocyanate, 2,4,4'-diphényléthertriisocyanate, 3,3'-diméthyl-4,4'-diphényldiisocyanate, 3,3'-diméthoxy-4,4'-diphényldiisocyanate, 1,5-naphtalènediisocyanate, 4,4',4''-triphénylméthanetriisocyanate et isophoronediisocyanate.

**13.** Procédé selon la revendication 12, caractérisé en ce qu'on utilise comme polyisocyanate du duphénylméthane-4,4'-diisocyanate ou du polyméthylènepolyphénylisocyanate.

**14.** Procédé selon la revendication 1, caractérisé en ce qu'on utilise une polyamine choisie parmi les suivantes: éthylènediamine, propylène-1,3-diamine, tétraméthylènediamine, pentaméthylènediamine, hexaméthylènediamine, diéthylènetriamine, triéthylènetétramine, tétraéthylènepentamine, pentaéthylènehexamine, 4,9-dioxadécane-1,12-diamine, 1,3-phénylènediamine, 2,4-toluylènediamine, 4,4'-diaminodiphénylméthane, 1,5-diaminonaphtalène, 1,3,5-triaminobenzène, 2,4,6-triaminotoluène, 1,3,6-triaminonaphtalène, 2,4,4'-triaminodiohényléther, 3,4,5-triamino-1,2,4-triazole et 1,4,5,8-tétraaminoanthraquinone.

**15.** Procédé selon la revendication 14, caractérisé en ce qu'on utilise de l'hexaméthylènediamine.

**16.** Procédé selon la revendication 1, caractérisé en ce qu'on utilise un pesticide choisi parmi les suivants: s-triazines, urées, halogénacétanilides, dérivés de diphényléther, dérivés d'acide phénoxypropionique, dinitroanilines, acylalanines, dérivés du triazole, carbamates, esters d'acide phosphorique, pyréthroïdes, esters d'acide benzylique, hydrocarbures halogénés polycycliques, formamidines et dihydro-1,3-thiazol-2-ylidène-anilines.

**17.** Procédé selon la revendication 1, caractérisé en ce qu'on opère à des températures dans l'intervalle de 10-75 °C.

**18.** Procédé selon la revendication 17, caractérisé en ce qu'on opère à des températures de 20-45 °C.

**19.** Procédé selon la revendication 1, caractérisé en ce qu'on introduit les constotuants servant à la formation de la paroi des capsules en une quantité de 2,5-30% en poids par rapport à la matière à encapsuler.

**20.** Procédé selon la revendication 19, caractérisé en ce qu'on introduit les constituants servant à la formation des parois des capsules en une quantité de 5-20% en poids par rapport à la matière à encapsuler.

**21.** Procédé selon la revendication 1, caractérisé en ce que, à côté des quantités d'agent dispersant anionique et de colloïde protecteur non-ionique et/ou d'agent de surface non-ionique utilisées, on utilise une quantité d'eau telle qu'elle forme une suspension de microcapsules contenant 100-700 g de microcapsules par litre.

**22.** Procédé selon la revendication 21, caractérisé en ce, à côté des quantités d'agent dispersant anionique et de colloïde protecteur non-ionique et/ou d'agent de surface non-ionique utilisées, on utilise une quantité d'eau telle qu'elle forme une suspension de microcapsules contenant 400-600 g de microcapsules par litre.